(19) Europäisches Patentamt
European Patent Office
Office européen des brevets

(11) **EP 2 631 688 A1**

(12) **EUROPEAN PATENT APPLICATION**
published in accordance with Art. 153(4) EPC

(43) Date of publication:
**28.08.2013 Bulletin 2013/35**

(21) Application number: **11843027.1**

(22) Date of filing: **13.09.2011**

(51) Int Cl.:
*G02B 6/024* (2006.01)     *G02B 6/00* (2006.01)
*G02F 1/365* (2006.01)

(86) International application number:
**PCT/JP2011/070815**

(87) International publication number:
**WO 2012/070295 (31.05.2012 Gazette 2012/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2010   JP 2010264084**

(71) Applicant: **Furukawa Electric Co., Ltd.
Chiyoda-ku
Tokyo 100-8322 (JP)**

(72) Inventors:
• **TAKAHASHI, Masanori
   Tokyo 100-8322 (JP)**
• **GONDA, Tomohiro
   Tokyo 100-8322 (JP)**
• **SUGIZAKI, Ryuichi
   Tokyo 100-8322 (JP)**

(74) Representative: **Schwabe, Hans-Georg
   Schwabe, Sandmair, Marx
   Patentanwälte
   Stuntzstrasse 16
   81677 München (DE)**

(54) **OPTICAL FIBER MODULE**

(57)   An optical fiber module includes a polarization-maintaining highly-nonlinear optical fiber and a housing. The polarization-maintaining highly-nonlinear optical fiber includes a core, a cladding surrounding the core and having two stress applying portions formed to sandwich the core and extend along the core, and a coating covering the cladding. The housing houses the polarization-maintaining highly-nonlinear optical fiber which is wound in a ring coil shape. The polarization-maintaining highly-nonlinear optical fiber has a bending loss of 0.01 dB/turn or less at a wavelength of 1550 nm when bent to form a diameter of 20 mm, a nonlinear coefficient $\gamma$ of 10 W$^{-1}$ km$^{-1}$ or larger at the wavelength of 1550 nm, a cutoff wavelength $\lambda$c of 1530 nm or shorter, and a zero-dispersion wavelength of not shorter than 1400 nm and not longer than 1650 nm.

FIG.1

**Description**

Field

The present invention relates to an optical fiber module.

Background

In recent years, more and more applications using highly-nonlinear optical fibers (High Non-Linear optical Fibers: HNLFs) with high optical nonlinearity have been put into practical use. To be widely used in various applications, highly-nonlinear optical fibers are often expected to be of a polarization maintaining (PM) type. In response to this demand, polarization-maintaining highly-nonlinear fibers (PM-HNLF) have been suggested (see, for example, Patent Literature 1), and are expected to be used in practical applications.

To put a highly-nonlinear optical fiber into practical use, not only polarization maintaining characteristics but also miniaturization of a module housing the optical fiber is desired (see, for example, Patent Literature 2). As for miniature highly-nonlinear optical fiber modules, ultraminiature optical fiber modules using small-diameter highly-nonlinear optical fibers with reduced outer diameters have been reported. In such an optical fiber module, a highly-nonlinear optical fiber of 200 m in length is wound around a bobbin of 25 mm in outer diameter, and is housed in a housing to realize ultraminiaturization.

Citation List

Patent Literature

Patent Literature 1: Japanese Patent Application
Laid-open No. 2002-207136
Patent Literature 2: Japanese Patent No. 3,813,496 Summary

Technical Problem

As described above, in view of practical use, polarization-maintaining highly-nonlinear optical fibers are expected to be incorporated in miniature optical fiber modules.

The present invention has been achieved to solve the above problem and it is an object of the present invention to provide a miniature optical fiber module having a polarization-maintaining highly-nonlinear optical fiber incorporated therein.

Solution to Problem

To solve the above problems and achieve the above object, an optical fiber module according to the present invention includes a polarization-maintaining highly-nonlinear optical fiber and a housing that houses the polarization-maintaining highly-nonlinear optical fiber which is wound in a ring coil shape. The polarization-maintaining highly-nonlinear optical fiber includes: a core; a cladding surrounding the core and having two stress applying portions formed to sandwich the core and extend along the core; and a coating covering the cladding. The polarization-maintaining highly-nonlinear optical fiber has a bending loss of 0.01 dB/turn or less at a wavelength of 1550 nm when bent to form a diameter of 20 mm, a nonlinear coefficient $\gamma$ of 10 $W^{-1}$ $km^{-1}$ or larger at the wavelength of 1550 nm, a cutoff wavelength $\lambda c$ of 1530 nm or shorter, and a zero-dispersion wavelength of not shorter than 1400 nm and not longer than 1650 nm.

Moreover, regarding the optical fiber module according to the present invention, in the above invention, the polarization-maintaining highly-nonlinear optical fiber has a polarization extinction ratio of -25 dB/km or lower at the wavelength of 1550 nm, and a beat length of 5.0 mm or shorter at the wavelength of 1550 nm.

Moreover, regarding the optical fiber module according to the present invention, in the above invention, in the polarization-maintaining highly-nonlinear optical fiber, a distance between a center of each of the stress applying portions and a center of the core is not shorter than 12 $\mu$m and not longer than 35 $\mu$m, a ratio of an outer diameter of each of the stress applying portions to an outer diameter of the cladding is not lower than 0.2 and not higher than 0.3, and a relative refractive index difference of the stress applying portions with respect to the cladding is not smaller than -0.7% and not larger than -0.5%.

Moreover, regarding the optical fiber module according to the present invention, in the above invention, the core of the polarization-maintaining highly-nonlinear optical fiber includes a first core and a second core surrounding the first core. A refractive index of the cladding is lower than a refractive index of the first core, and is higher than a refractive index of the second core.

A relative refractive index difference of the first core with respect to the cladding is not smaller than 1.8% and not larger than 3.0%. A relative refractive index difference of the second core with respect to the cladding is not smaller than -1.0% and not larger than -0.5%. A core diameter of the second core is not smaller than 6.0 $\mu$m and not larger than 10.0 $\mu$m. A ratio of a core diameter of the first core to the core diameter of the second core is not lower than 0.35 and not higher than 0.65.

Moreover, regarding the optical fiber module according to the present invention, in the above invention, a diameter of the cladding of the polarization-maintaining highly-nonlinear optical fiber is not smaller than 40 $\mu$m and not larger than 80 $\mu$m.

Moreover, regarding the optical fiber module according to the present invention, in the above invention, the polarization-maintaining highly-nonlinear optical fiber is wound in a ring coil shape having an inner diameter of not smaller than 10 mm and not larger than 60 mm.

Moreover, regarding the optical fiber module according to the present invention, in the above invention, the polarization-maintaining highly-nonlinear optical fiber is wound in a ring coil shape having an inner diameter of not smaller than 10 mm and not larger than 40 mm. Advantageous Effects of Invention

It is possible to provide a miniature optical fiber module having a polarization-maintaining highly-nonlinear optical fiber incorporated therein.

Brief Description of Drawings

[FIG. 1] FIG. 1 is a schematic diagram of an optical fiber module according to a first embodiment.
[FIG. 2] FIG. 2 is a diagram of a schematic cross-section and a refractive index profile of the polarization-maintaining highly-nonlinear optical fiber shown in FIG. 1.
[FIG. 3] FIG. 3 is a table of examples of the settings of structural parameters in the polarization-maintaining highly-nonlinear optical fiber shown in FIG. 2, and examples of optical characteristics realized by the settings.
[FIG. 4] FIG. 4 is a table of examples of the settings of structural parameters in the polarization-maintaining highly-nonlinear optical fiber shown in FIG. 2, and examples of optical characteristics realized by the settings.
[FIG. 5] FIG. 5 is a table of examples of the settings of structural parameters in the polarization-maintaining highly-nonlinear optical fiber shown in FIG. 2, and examples of optical characteristics realized by the settings.
[FIG. 6] FIG. 6 is a graph of a relationship between normalized crosstalks and winding diameters of the polarization-maintaining highly-nonlinear optical fibers in optical fiber modules of Example 1 and Comparative Example 1.
[FIG. 7] FIG. 7 is a graph of a relationship between normalized crosstalks and winding diameters of the polarization-maintaining highly-nonlinear optical fibers in optical fiber modules of Example 2 and Comparative Example 2.
[FIG. 8] FIG. 8 is a graph of a relationship between normalized crosstalks and winding diameters of the polarization-maintaining highly-nonlinear optical fibers in optical fiber modules of Example 3 and Comparative Example 3.
[FIG. 9] FIG. 9 is a table of outer diameters and heights of bundles realized in a case where the polarization-maintaining highly-nonlinear optical fibers are made to have various coating diameters, fiber lengths, and winding diameters.
[FIG. 10] FIG. 10 is a table of the outer diameters and heights of bundles realized in a case where the polarization-maintaining highly-nonlinear optical fibers are made to have various coating diameters, fiber lengths, and winding diameters.

Description of Embodiments

The following is a detailed description of embodiments of optical fiber modules according to the present invention, with reference to the accompanying drawings. It should be noted that the present invention is not limited by these embodiments.

(First Embodiment)

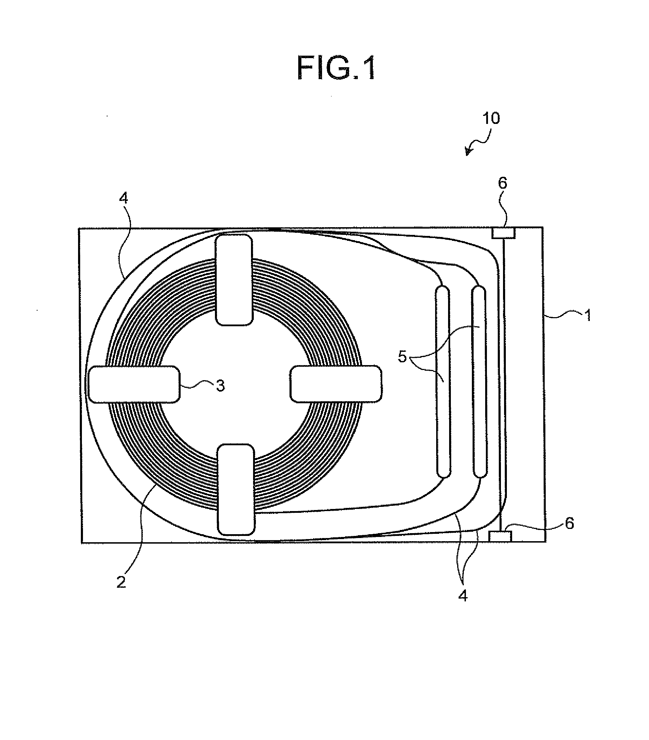

FIG. 1 is a schematic diagram of an optical fiber module according to a first embodiment. As shown in FIG. 1, this optical fiber module 10 has a polarization-maintaining highly-nonlinear optical fiber 2 that is wound in a ring coil shape and is housed in a housing 1. The winding diameter is 10 mm or larger, or preferably, 60 mm or smaller, or more preferably, 40 mm or smaller.

The polarization-maintaining highly-nonlinear optical fiber 2 is bound with a binder 3 and is secured to the housing 1. Single-mode optical fibers 4 are fused and connected to both ends of the polarization-maintaining highly-nonlinear optical fiber 2. The single-mode optical fibers 4 are single-mode optical fibers specified by the ITU-T (International Telecommunication Union-Telecommunication Standardization Sector) G.652, for example, but is not particularly limited to that. The fusion splice portions between the polarization-maintaining highly-nonlinear optical fiber 2 and the single-mode optical fibers 4 are protected by reinforcing sleeves 5. The opposite ends of the single-mode optical fibers 4 from the fusion splice portions are connected to optical connectors 6. Accordingly, this optical fiber module 10 can connect to an external optical-connector-attached optical fiber via the optical connectors 6.

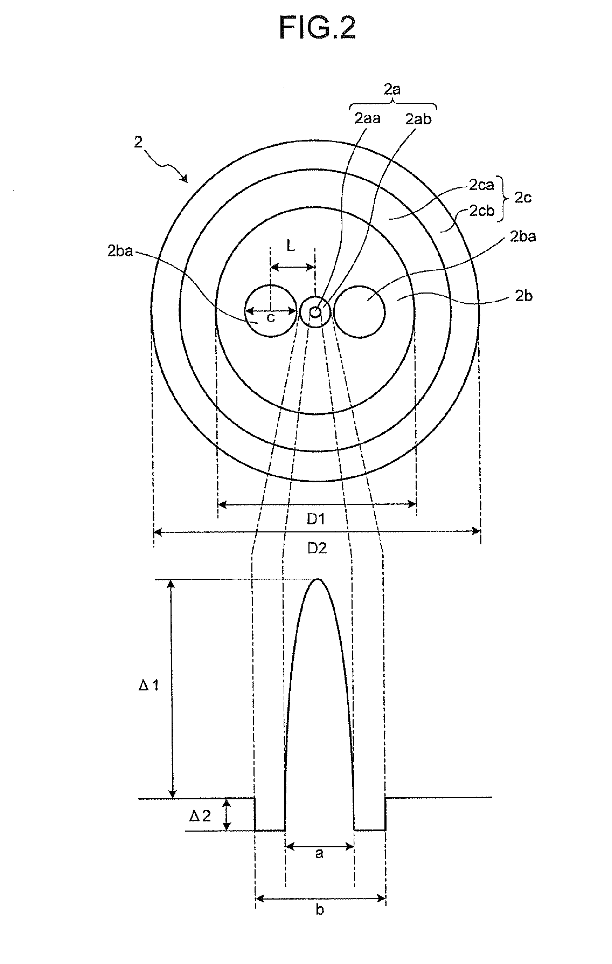

Next, the polarization-maintaining highly-nonlinear optical fiber 2 is described. FIG. 2 is a diagram of a schematic cross-section and a refractive index profile of the polarization-maintaining highly-nonlinear optical fiber shown in FIG. 1. As shown in FIG. 2, the polarization-maintaining highly-nonlinear optical fiber 2 includes: a core 2a that includes a first core 2aa and a second core 2ab surrounding the first core 2aa; a cladding 2b that surrounds the core 2a, and includes two stress applying portions 2ba that sandwich the core 2a and are formed along the core 2a; and a resin coating 2c that includes a first coating 2ca covering the cladding 2b, and a second coating 2cb. In this manner, the two stress applying portions 2ba formed to sandwich the core 2a apply stress to the core 2a, and the polarization-maintaining highly-nonlinear optical fiber 2 serves as a highly-nonlinear optical fiber of a polarization maintaining type.

The first core 2aa is made of silica glass having germanium added thereto as a dopant to increase the refractive index, for example. The second core 2ab is made of silica glass having fluorine added thereto as a dopant to lower the refractive index, for example. In the cladding 2b, the portions other than the stress applying portions 2ba are made of pure silica glass not containing any dopant to adjust the refractive index, and the stress applying portions 2ba are made of silica glass having boron added thereto to apply stress to the core 2a. As a result, in the polarization-maintaining highly-nonlinear optical fiber 2, the refractive index of the cladding 2b is lower than the refractive index of the first core 2aa, and is higher than the refractive index of the second core 2ab. That is, the polarization-maintaining highly-nonlinear optical fiber 2 has a W-shaped refractive index profile.

In the following, the relative refractive index difference of the first core 2aa with respect to the cladding 2b is represented by Δ1, the relative refractive index difference of the second core 2ab with respect to the cladding 2b is represented by Δ2, and the relative refractive index difference of the stress applying portions 2ba with respect to the cladding 2b is represented by Δ4. Where n1 represents the largest refractive index of the first core 2aa, n2 represents the refractive index of the second core 2ab, nc represents the refractive index of the cladding 2b, and n4 represents the refractive index of the stress applying portions 2ba, the relative refractive index differences Δ1, Δ2, and Δ4 are defined by the following equations (1) through (3):

$$\Delta1 = \{(n1 - nc) / nc\} \times 100 \ [\%] \qquad\qquad (1)$$

$$\Delta2 = \{(n2 - nc) / nc\} \times 100 \ [\%] \qquad\qquad (2)$$

$$\Delta4 = \{(n4 - nc) / nc\} \times 100 \ [\%] \qquad\qquad (3)$$

The core diameter a of the first core 2aa (a first core diameter) is defined as the diameter at the location with a relative refractive index difference of 1/2 of Δ1 in the boundary region between the first core 2aa and the second core 2ab. The core diameter b of the second core 2ab (a second core diameter) is defined as the diameter at the location with a relative refractive index difference of 1/2 of Δ2 in the boundary region between the second core 2ab and the cladding 2b. Also, the outer diameter of the cladding 2b is a cladding diameter D1, and the outer diameter of the coating 2c is a coating diameter D2. The outer diameter of each of the stress applying portions 2ba is represented by c, and the distance between the center of each of the stress applying portions 2ba and the center of the core 2a is represented by L.

Next, examples of the settings of structural parameters such as the relative refractive index differences Δ1, Δ2, and Δ4, the first core diameter a, the second core diameter b, the cladding diameter, and the coating diameter in the polarization-maintaining highly-nonlinear optical fiber 2, and examples of optical characteristics of the polarization-maintaining highly-nonlinear optical fiber 2 realized by the settings, are described.

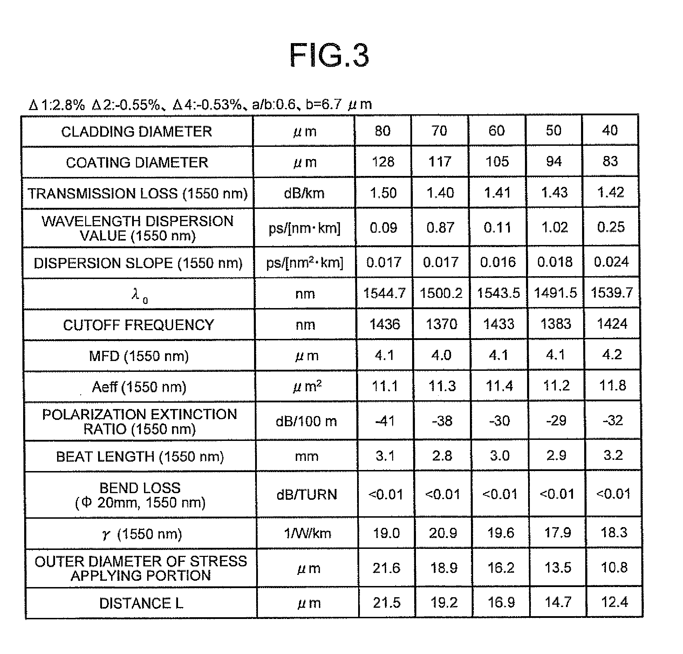

FIGS. 3 through 5 are tables of examples of the settings of structural parameters in polarization-maintaining highly-nonlinear optical fibers, and examples of optical characteristics realized by the settings. In FIGS. 3 through 5, "$\lambda_0$" represents zero-dispersion wavelength, "MFD" represents mode field diameter, and "$\gamma$" represents nonlinear coef-

ficient. The bending loss is the bending loss generated at a wavelength of 1550 nm when the fiber is bent to form a diameter of 20 mm. Other items shown with (1550 nm) are values obtained at the wavelength of 1550 nm. Here, "1 turn" means a situation where an optical fiber is bent 360 degrees to form a certain diameter.

In the example shown in FIG. 3, the relative refractive index difference $\Delta 1$ is 2.8%, $\Delta 2$ is -0.55%, $\Delta 4$ is -0.53%, a/b representing the ratio of the first core diameter a to the second core diameter b is 0.6, and the second core diameter b is 6.7 $\mu$m. Further, to miniaturize the module by reducing the winding diameter, the cladding diameter is made a small diameter between 40 and 80 $\mu$m, and the outer diameter c of the stress applying portions is set at a value between 10.8 and 21.6 $\mu$m in accordance with the cladding diameter. Also, the distance L between the center of each stress applying portion and the center of the core is set at a value between 12.4 and 21.5 $\mu$m.

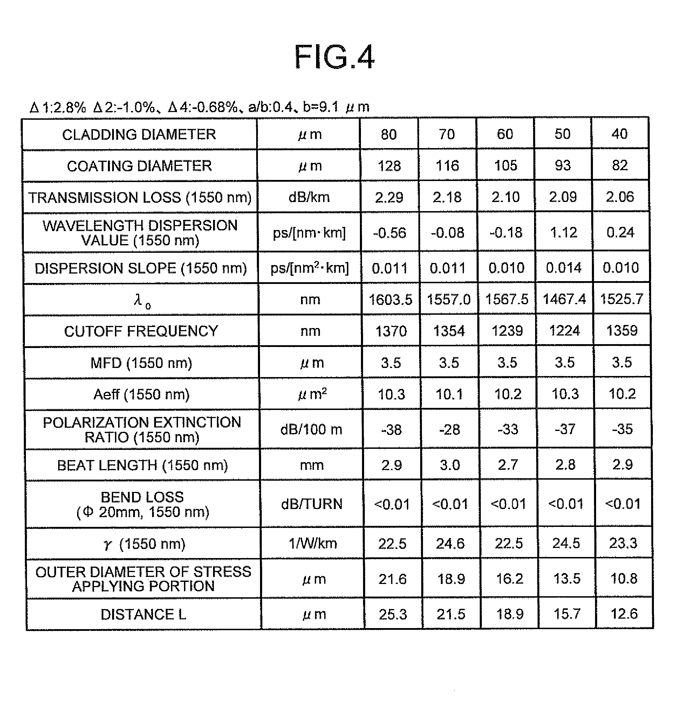

In the example shown in FIG. 4, the relative refractive index difference $\Delta 1$ is 2.8%, $\Delta 2$ is -1.0%, $\Delta 4$ is -0.68%, the ratio a/b is 0.4, and the second core diameter b is 9.1 $\mu$m. Further, the cladding diameter is made a small diameter between 40 and 80 $\mu$m, and the outer diameter c of the stress applying portions is set at a value between 10.8 and 21.6 $\mu$m in accordance with the cladding diameter. Also, the distance L between the center of each stress applying portion and the center of the core is set at a value between 12.6 and 25.3 $\mu$m.

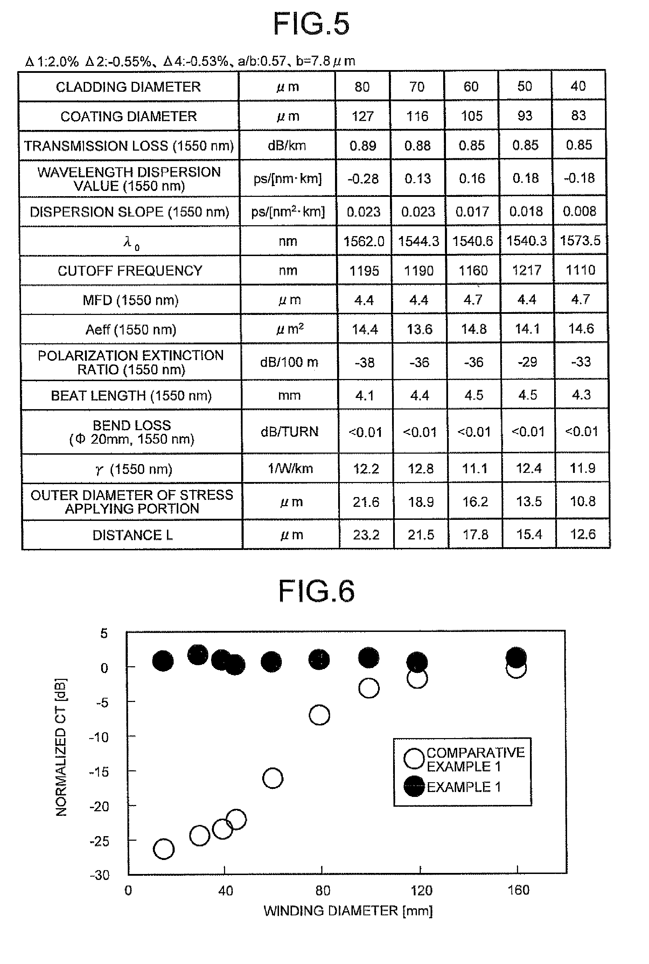

In the example shown in FIG. 5, the relative refractive index difference $\Delta 1$ is 2.0%, $\Delta 2$ is -0.55%, $\Delta 4$ is -0.53%, the ratio a/b is 0.57, and the second core diameter b is 7.8 $\mu$m. Further, the cladding diameter is made a small diameter between 40 and 80 $\mu$m, and the outer diameter c of the stress applying portions is set at a value between 10.8 and 21.6 $\mu$m in accordance with the cladding diameter. Also, the distance L between the center of each stress applying portion and the center of the core is set at a value between 12.6 and 23.2 $\mu$m.

In each of the polarization-maintaining highly-nonlinear optical fibers shown in FIGS. 3 through 5, the bending loss at the wavelength of 1550 nm is 0.01 dB/turn or less, the nonlinear coefficient $\gamma$ at the wavelength of 1550 nm is a highly-nonlinear coefficient of 10 $W^{-1}$ $km^{-1}$ or larger, the cutoff wavelength $\lambda c$ is 1530 nm or shorter, and the zero-dispersion wavelength $\lambda_0$ is not shorter than 1400 nm but not longer than 1650 nm. Accordingly, any of those fibers can be suitably used as a highly-nonlinear optical fiber in the wavelength band of 1530 to 1650 nm, which is used in optical fiber communications. Further, in each of the polarization-maintaining highly-nonlinear optical fibers shown in FIGS. 3 through 5, the polarization extinction ratio is -25 dB/km or lower at the wavelength of 1550 nm, and the beat length is 5.0 mm or less at the wavelength of 1550 nm. Accordingly, those optical fibers also excel in polarization maintaining characteristics, and can be used in various applications such as optical signal processing utilizing nonlinear optical phenomena.

It is noted that the structural parameters in the polarization-maintaining highly-nonlinear optical fiber 2 are not limited to those shown in FIGS. 3 through 5. For example, in a case where the relative refractive index difference $\Delta 1$ is not smaller than 1.8% but not larger than 3.0%, $\Delta 2$ is not smaller than -1.0% but not larger than - 0.5%, the second core diameter b is not smaller than 6.0 $\mu$m but not larger than 10.0 $\mu$m, and a/b representing the ratio of the first core diameter a to the second core diameter b is not lower than 0.35 but not higher than 0.65, preferred optical characteristics are realized. That is, the bending loss at the wavelength of 1550 nm is 0.01 dB/turn or less, the nonlinear coefficient $\gamma$ at the wavelength of 1550 nm is 10 $W^{-1}$ $km^{-1}$ or larger, the cutoff wavelength $\lambda c$ is 1530 nm or shorter, and the zero-dispersion wavelength is not shorter than 1400 nm but not longer than 1650 nm.

Further, as long as the distance L between the center of each stress applying portion 2ba and the center of the core 2a is not shorter than 12 $\mu$m but not longer than 35 $\mu$m, the ratio of the outer diameter c of each stress applying portion 2ba to the cladding diameter is not lower than 0.2 but not higher than 0.3, and the relative refractive index difference $\Delta 4$ is not smaller than -0.7% but not larger than -0.5%, preferred polarization maintaining characteristics are realized. That is, the polarization extinction ratio is -25 dB/km or lower, and the beat length is not shorter than 2.5 mm but not longer than 5.0 mm.

Here, in this optical fiber module 10, the polarization-maintaining highly-nonlinear optical fiber 2 is wound in a ring coil shape having an inner diameter of not smaller than 10 mm but not larger than 60 mm, or preferably, not larger than 40 mm. Since the cladding diameter is not smaller than 40 $\mu$m but not larger than 80 $\mu$m, the polarization-maintaining highly-nonlinear optical fiber 2 has a low fracture rate even when wound to form such a small inner diameter, and accordingly, maintains a sufficient mechanical strength.

In this optical fiber module 10, the polarization-maintaining highly-nonlinear optical fiber 2 is wound in a ring coil shape. Accordingly, the polarization extinction ratio is not degraded, even though the fiber is wound to form a small inner diameter. It is noted that, in a case where the polarization-maintaining highly-nonlinear optical fiber 2 is wound around a bobbin having such a small inner diameter, the polarization extinction ratio is degraded due to lateral pressure applied from the bobbin. Therefore, in this optical fiber module 10, the polarization maintaining characteristics of the polarization-maintaining highly-nonlinear optical fiber 2 wound to form such a small inner diameter remain the same as the characteristics observed before the module is formed. In view of this, the optical fiber module 10 has excellent polarization maintaining characteristics, though the polarization-maintaining highly-nonlinear optical fiber 2 is wound to form a small inner diameter and is housed in a small housing.

As described above, the optical fiber module 10 according to the first embodiment is a miniature optical fiber module having the polarization-maintaining highly-nonlinear optical fiber 2 incorporated therein, and has excellent polarization maintaining characteristics.

Next, the present embodiment is described in greater detail through examples of the present invention. It should be noted that the invention is not limited by these examples.

(Example 1, Comparative Example 1)

As Example 1 of the present embodiment, the same optical fiber modules as that illustrated in FIG. 1 were manufactured by winding the same polarization-maintaining highly-nonlinear optical fibers as that shown in FIG. 3 in a ring coil shape. Each polarization-maintaining highly-nonlinear optical fiber had a cladding diameter of 80 $\mu$m, and a coating diameter of 128 $\mu$m. The length (the fiber length) of each polarization-maintaining highly-nonlinear optical fiber was 100 m. In the polarization-maintaining highly-nonlinear optical fibers, the inner diameters of the ring coils were 15 mm, 30 mm, 40 mm, 45 mm, 60 mm, 80 mm, 100 mm, 120 mm, and 160 mm. Also, as Comparative Example 1, optical fiber modules were manufactured by winding the same polarization-maintaining highly-nonlinear optical fibers as those of Example 1 around bobbins having the same outer diameters as the respective inner diameters of Example 1.

The polarization extinction ratio (the crosstalk or CT) of each of the optical fiber modules of Example 1 and Comparative Example 1 was then measured. Here, CT represents the polarization maintaining capability of a polarization-maintaining optical fiber. CT can be expressed by using the ratio between the intensity of light in Y-polarization mode and the intensity of light leaking in X-polarization mode perpendicular to the Y-polarization mode on the emission side of one end of a polarization-maintaining optical fiber having a predetermined length, when linearly-polarized light in the Y-polarization mode of the X- and Y-polarization modes perpendicular to each other enters the polarization-maintaining optical fiber from the other end. CT is normally expressed by the dB according to the following equation (4):

$$\eta = 10\log \left( P_X / P_Y \right) \tag{4}$$

where

$\eta$ represents CT, $P_X$ represents the intensity of linearly-polarized light in the X-polarization mode, and $P_Y$ represents the intensity of linearly-polarized light in the Y-polarization mode. Incident light in the X- or Y-polarization mode causes coupling between the polarization modes in accordance with the CT while traveling through the polarization-maintaining optical fiber. Therefore, where polarization maintaining characteristics are required, it is desirable to restrict the CT to a small value.

FIG. 6 is a graph of the relationship between normalized crosstalks and winding diameters of the polarization-maintaining highly-nonlinear optical fibers in the optical fiber modules of Example 1 and Comparative Example 1. In FIG. 6, the winding diameters on the abscissa axis represent the inner diameters formed when the polarization-maintaining highly-nonlinear optical fibers were wound in Example 1, and represent the outer diameters of the bobbins in Comparative Example 1. The normalized CTs on the ordinate axis indicate the crosstalks in Example 1 and Comparative Example 1 normalized by the crosstalk obtained in a case where the fiber is wound around the bobbin of Comparative Example 1 having an outer diameter of 160 mm. It is noted that the value of crosstalk becomes larger in the negative direction of the ordinate axis. That is, the crosstalk characteristics are degraded as the normalized crosstalk becomes smaller.

As shown in FIG. 6, in the optical fiber modules of Comparative Example 1, the normalized crosstalk rapidly becomes smaller as the winding diameter becomes smaller than approximately 100 mm, and the crosstalk characteristics are degraded. In the optical fiber modules of Example 1, on the other hand, the normalized crosstalk is almost constant even when the winding diameter becomes smaller. Accordingly, it was confirmed that the optical fiber modules of Example 1 have excellent polarization maintaining characteristics even though the polarization-maintaining highly-nonlinear optical fibers are made to have small winding diameters to form miniature modules.

(Example 2, Comparative Example 2)

As Example 2 of the present enbodiment, the same optical fiber modules as that illustrated in FIG. 1 were manufactured by winding the same polarization-maintaining highly-nonlinear optical fibers as that shown in FIG. 3 in a ring coil shape. Each polarization-maintaining highly-nonlinear optical fiber had a cladding diameter of 60 $\mu$m, and a coating diameter of 105 $\mu$m. The inner diameters of the polarization-maintaining highly-nonlinear optical fibers were the same as the respective inner diameters of Example 1. Also, as Comparative Example 2, optical fiber modules were manufactured by winding the same polarization-maintaining highly-nonlinear optical fibers as those of Example 2 around bobbins having the same outer diameters as the respective inner diameters of Example 2.

The crosstalk of each of the optical fiber modules of Example 2 and Comparative Example 2 was then measured.

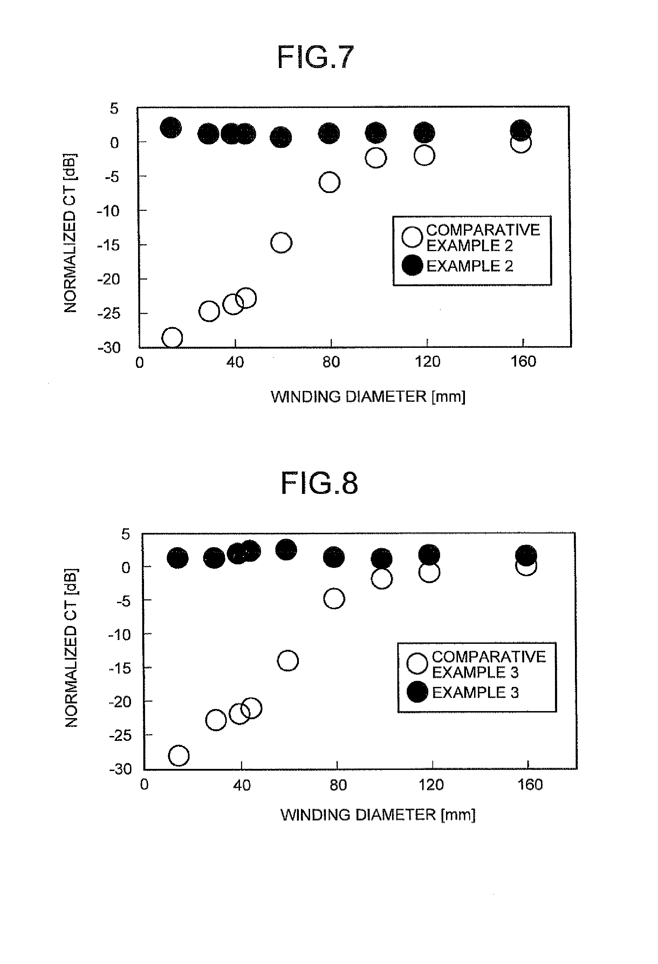

FIG. 7 is a graph showing the relationship between normalized crosstalks and winding diameters of the polarization-maintaining highly-nonlinear optical fibers in the optical fiber modules of Example 2 and Comparative Example 2.

As shown in FIG. 7, in the optical fiber modules of Comparative Example 2, the normalized crosstalk rapidly becomes smaller as the winding diameter becomes smaller than approximately 100 mm, and the crosstalk characteristics are degraded. In the optical fiber modules of Example 2, on the other hand, the normalized crosstalk is almost constant even when the winding diameter becomes smaller. Accordingly, it was confirmed that the optical fiber modules of Example 2 have excellent polarization maintaining characteristics even though the polarization-maintaining highly-nonlinear optical fibers are made to have small winding diameters to form miniature modules.

(Example 3, Comparative Example 3)

As Example 3 of the present embodiment, the same optical fiber modules as that illustrated in FIG. 1 were manufactured by winding the same polarization-maintaining highly-nonlinear optical fibers as that shown in FIG. 3 in a ring coil shape. Each polarization-maintaining highly-nonlinear optical fiber had a cladding diameter of 40 $\mu$m, and a coating diameter of 83 $\mu$m. The inner diameters of the polarization-maintaining highly-nonlinear optical fibers were the same as the respective inner diameters of Example 1. Also, as Comparative Example 3, optical fiber modules were manufactured by winding the same polarization-maintaining highly-nonlinear optical fibers as those of Example 3 around bobbins having the same outer diameters as the respective inner diameters of Example 3.

The crosstalk of each of the optical fiber modules of Example 3 and Comparative Example 3 was then measured. FIG. 8 is a graph of the relationship between normalized crosstalks and winding diameters of the polarization-maintaining highly-nonlinear optical fibers in the optical fiber modules of Example 3 and Comparative Example 3.

As shown in FIG. 8, in the optical fiber modules of Comparative Example 3, the normalized crosstalk rapidly becomes smaller as the winding diameter becomes smaller than approximately 100 mm, and the crosstalk characteristics are degraded. In the optical fiber modules of Example 2, on the other hand, the normalized crosstalk is almost constant even when the winding diameter becomes smaller. Accordingly, it was confirmed that the optical fiber modules of Example 3 have excellent polarization maintaining characteristics even though the polarization-maintaining highly-nonlinear optical fibers are made to have small winding diameters to form miniature modules.

In the polarization-maintaining highly-nonlinear optical fibers used in Examples 1 through 3 and Comparative Example 1 through 3, the cladding diameters and the coating diameters vary, but the thicknesses of the coatings are almost the same, being 21.5 to 24 $\mu$m. In FIGS. 6 through 8, the crosstalk characteristics are degraded when the winding diameters becomes smaller than approximately 100 mm, regardless of the differences in cladding diameter and coating diameter.

Next, the sizes of bundles formed by winding polarization-maintaining highly-nonlinear optical fibers of the present invention in a case where the polarization-maintaining highly-nonlinear optical fibers are made to have various coating diameters, fiber lengths, and inner diameters of ring coils are described.

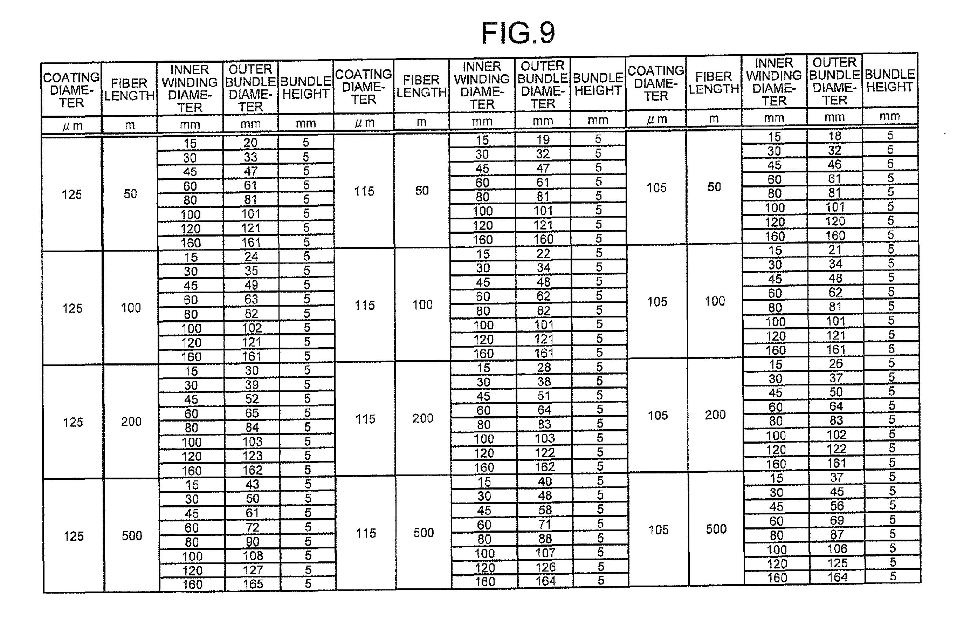

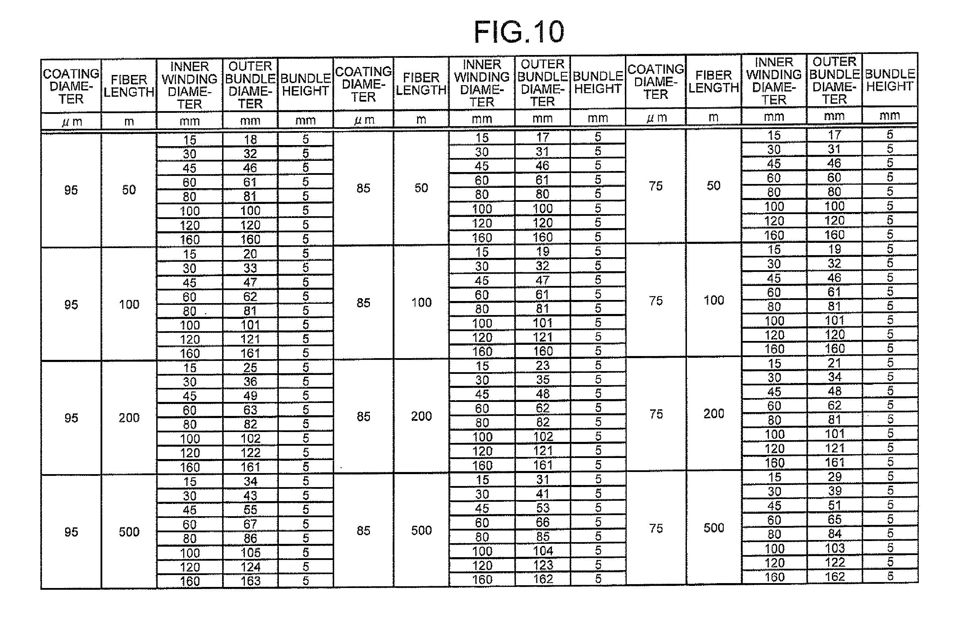

FIGS. 9 and 10 are tables of the outer diameters and heights of the bundles formed by winding polarization-maintaining highly-nonlinear optical fibers in a case where the polarization-maintaining highly-nonlinear optical fibers are made to have various coating diameters, fiber lengths, and inner diameters of the ring coils.

For example, as shown in FIG. 9, in a case where the coating diameter is 125 $\mu$m, the fiber length is 50 m, and the inner diameter of the ring coil (the inner winding diameter) is made 15 mm, a miniature bundle having an outer diameter of 20 mm and a height of 5 mm can be formed. Accordingly, a miniature optical fiber module can be realized. Also, as shown in FIG. 10, in a case where the coating diameter is 75 $\mu$m, the fiber length is 50 m, and the inner diameter is 15 mm, the outer diameter of the bundle can be made as small as 17 mm. Accordingly, an even smaller optical fiber module can be realized. It is noted that, as shown in Examples 1 through 3, excellent polarization maintaining characteristics can be maintained by reducing the inner diameter of the polarization-maintaining highly-nonlinear optical fiber to 15 mm.

According to the present embodiments, a miniature optical fiber module having a polarization-maintaining highly-nonlinear optical fiber incorporated therein can be realized.

Industrial Applicability

An optical fiber module according to the present invention is mainly suitable for optical communications. Reference Signs List

1 housing
2 polarization-maintaining highly-nonlinear optical fiber
2a core

2aa first core
2ab second core
2b cladding
2ba stress applying portion
2c coating
2ca first coating
2cb second coating
3 binder
4 single-mode optical fiber
5 reinforcing sleeve
6 optical connector
10 optical fiber module

**Claims**

1. An optical fiber module comprising:

   a polarization-maintaining highly-nonlinear optical fiber including:

     a core;
     a cladding surrounding the core and having two stress applying portions formed to sandwich the core and extend along the core; and
     a coating covering the cladding; and

   a housing that houses the polarization-maintaining highly-nonlinear optical fiber which is wound in a ring coil shape,
   wherein the polarization-maintaining highly-nonlinear optical fiber has a bending loss of 0.01 dB/turn or less at a wavelength of 1550 nm when bent to form a diameter of 20 mm, a nonlinear coefficient $\gamma$ of 10 W$^{-1}$ km$^{-1}$ or larger at the wavelength of 1550 nm, a cutoff wavelength $\lambda$c of 1530 nm or shorter, and a zero-dispersion wavelength of not shorter than 1400 nm and not longer than 1650 nm.

2. The optical fiber module according to claim 1, wherein, the polarization-maintaining highly-nonlinear optical fiber has a polarization extinction ratio of -25 dB/km or lower at the wavelength of 1550 nm, and a beat length of 5.0 mm or shorter at the wavelength of 1550 nm.

3. The optical fiber module according to claim 1 or 2, wherein, in the polarization-maintaining highly-nonlinear optical fiber, a distance between a center of each of the stress applying portions and a center of the core is not shorter than 12 $\mu$m and not longer than 35 $\mu$m, a ratio of an outer diameter of each of the stress applying portions to an outer diameter of the cladding is not lower than 0.2 and not higher than 0.3, and a relative refractive index difference of the stress applying portions with respect to the cladding is not smaller than -0.7% and not larger than -0.5%.

4. The optical fiber module according to any one of claims 1 to 3, wherein
   the core of the polarization-maintaining highly-nonlinear optical fiber includes a first core and a second core surrounding the first core,
   a refractive index of the cladding is lower than a refractive index of the first core, and is higher than a refractive index of the second core,
   a relative refractive index difference of the first core with respect to the cladding is not smaller than 1.8% and not larger than 3.0%,
   a relative refractive index difference of the second core with respect to the cladding is not smaller than -1.0% and not larger than -0.5%,
   a core diameter of the second core is not smaller than 6.0 $\mu$m and not larger than 10.0 $\mu$m, and
   a ratio of a core diameter of the first core to the core diameter of the second core is not lower than 0.35 and not higher than 0.65.

5. The optical fiber module according to any one of claims 1 to 4, wherein a diameter of the cladding of the polarization-maintaining highly-nonlinear optical fiber is not smaller than 40 $\mu$m and not larger than 80 $\mu$m.

6. The optical fiber module according to any one of claims 1 to 5, wherein the polarization-maintaining highly-nonlinear optical fiber is wound in a ring coil shape having an inner diameter of not smaller than 10 mm and not larger than 60 mm.

7. The optical fiber module according to any one of claims 1 to 5, wherein the polarization-maintaining highly-nonlinear optical fiber is wound in a ring coil shape having an inner diameter of not smaller than 10 mm and not larger than 40 mm.

# FIG.1

# FIG.2

# FIG.3

Δ1:2.8% Δ2:-0.55%, Δ4:-0.53%, a/b:0.6, b=6.7 $\mu$ m

| CLADDING DIAMETER | $\mu$ m | 80 | 70 | 60 | 50 | 40 |
|---|---|---|---|---|---|---|
| COATING DIAMETER | $\mu$ m | 128 | 117 | 105 | 94 | 83 |
| TRANSMISSION LOSS (1550 nm) | dB/km | 1.50 | 1.40 | 1.41 | 1.43 | 1.42 |
| WAVELENGTH DISPERSION VALUE (1550 nm) | ps/[nm·km] | 0.09 | 0.87 | 0.11 | 1.02 | 0.25 |
| DISPERSION SLOPE (1550 nm) | ps/[nm²·km] | 0.017 | 0.017 | 0.016 | 0.018 | 0.024 |
| $\lambda_0$ | nm | 1544.7 | 1500.2 | 1543.5 | 1491.5 | 1539.7 |
| CUTOFF FREQUENCY | nm | 1436 | 1370 | 1433 | 1383 | 1424 |
| MFD (1550 nm) | $\mu$ m | 4.1 | 4.0 | 4.1 | 4.1 | 4.2 |
| Aeff (1550 nm) | $\mu$ m² | 11.1 | 11.3 | 11.4 | 11.2 | 11.8 |
| POLARIZATION EXTINCTION RATIO (1550 nm) | dB/100 m | -41 | -38 | -30 | -29 | -32 |
| BEAT LENGTH (1550 nm) | mm | 3.1 | 2.8 | 3.0 | 2.9 | 3.2 |
| BEND LOSS (Φ 20mm, 1550 nm) | dB/TURN | <0.01 | <0.01 | <0.01 | <0.01 | <0.01 |
| $\gamma$ (1550 nm) | 1/W/km | 19.0 | 20.9 | 19.6 | 17.9 | 18.3 |
| OUTER DIAMETER OF STRESS APPLYING PORTION | $\mu$ m | 21.6 | 18.9 | 16.2 | 13.5 | 10.8 |
| DISTANCE L | $\mu$ m | 21.5 | 19.2 | 16.9 | 14.7 | 12.4 |

# FIG.4

Δ1:2.8% Δ2:-1.0%、 Δ4:-0.68%、 a/b:0.4、 b=9.1 μm

| CLADDING DIAMETER | μm | 80 | 70 | 60 | 50 | 40 |
|---|---|---|---|---|---|---|
| COATING DIAMETER | μm | 128 | 116 | 105 | 93 | 82 |
| TRANSMISSION LOSS (1550 nm) | dB/km | 2.29 | 2.18 | 2.10 | 2.09 | 2.06 |
| WAVELENGTH DISPERSION VALUE (1550 nm) | ps/[nm·km] | -0.56 | -0.08 | -0.18 | 1.12 | 0.24 |
| DISPERSION SLOPE (1550 nm) | ps/[nm²·km] | 0.011 | 0.011 | 0.010 | 0.014 | 0.010 |
| $\lambda_0$ | nm | 1603.5 | 1557.0 | 1567.5 | 1467.4 | 1525.7 |
| CUTOFF FREQUENCY | nm | 1370 | 1354 | 1239 | 1224 | 1359 |
| MFD (1550 nm) | μm | 3.5 | 3.5 | 3.5 | 3.5 | 3.5 |
| Aeff (1550 nm) | μm² | 10.3 | 10.1 | 10.2 | 10.3 | 10.2 |
| POLARIZATION EXTINCTION RATIO (1550 nm) | dB/100 m | -38 | -28 | -33 | -37 | -35 |
| BEAT LENGTH (1550 nm) | mm | 2.9 | 3.0 | 2.7 | 2.8 | 2.9 |
| BEND LOSS (Φ 20mm, 1550 nm) | dB/TURN | <0.01 | <0.01 | <0.01 | <0.01 | <0.01 |
| γ (1550 nm) | 1/W/km | 22.5 | 24.6 | 22.5 | 24.5 | 23.3 |
| OUTER DIAMETER OF STRESS APPLYING PORTION | μm | 21.6 | 18.9 | 16.2 | 13.5 | 10.8 |
| DISTANCE L | μm | 25.3 | 21.5 | 18.9 | 15.7 | 12.6 |

13

# FIG.5

Δ1:2.0% Δ2:-0.55%、Δ4:-0.53%、a/b:0.57、b=7.8 μm

| CLADDING DIAMETER | μm | 80 | 70 | 60 | 50 | 40 |
|---|---|---|---|---|---|---|
| COATING DIAMETER | μm | 127 | 116 | 105 | 93 | 83 |
| TRANSMISSION LOSS (1550 nm) | dB/km | 0.89 | 0.88 | 0.85 | 0.85 | 0.85 |
| WAVELENGTH DISPERSION VALUE (1550 nm) | ps/[nm·km] | -0.28 | 0.13 | 0.16 | 0.18 | -0.18 |
| DISPERSION SLOPE (1550 nm) | ps/[nm²·km] | 0.023 | 0.023 | 0.017 | 0.018 | 0.008 |
| $\lambda_0$ | nm | 1562.0 | 1544.3 | 1540.6 | 1540.3 | 1573.5 |
| CUTOFF FREQUENCY | nm | 1195 | 1190 | 1160 | 1217 | 1110 |
| MFD (1550 nm) | μm | 4.4 | 4.4 | 4.7 | 4.4 | 4.7 |
| Aeff (1550 nm) | μm² | 14.4 | 13.6 | 14.8 | 14.1 | 14.6 |
| POLARIZATION EXTINCTION RATIO (1550 nm) | dB/100 m | -38 | -36 | -36 | -29 | -33 |
| BEAT LENGTH (1550 nm) | mm | 4.1 | 4.4 | 4.5 | 4.5 | 4.3 |
| BEND LOSS (Φ 20mm, 1550 nm) | dB/TURN | <0.01 | <0.01 | <0.01 | <0.01 | <0.01 |
| $\gamma$ (1550 nm) | 1/W/km | 12.2 | 12.8 | 11.1 | 12.4 | 11.9 |
| OUTER DIAMETER OF STRESS APPLYING PORTION | μm | 21.6 | 18.9 | 16.2 | 13.5 | 10.8 |
| DISTANCE L | μm | 23.2 | 21.5 | 17.8 | 15.4 | 12.6 |

# FIG.6

14

## FIG.7

WINDING DIAMETER [mm]

## FIG.8

WINDING DIAMETER [mm]

# FIG.9

| COATING DIAMETER (μm) | FIBER LENGTH (m) | INNER WINDING DIAMETER (mm) | OUTER BUNDLE DIAMETER (mm) | BUNDLE HEIGHT (mm) |
|---|---|---|---|---|
| 125 | 50 | 15 | 20 | 5 |
| 125 | 50 | 30 | 33 | 5 |
| 125 | 50 | 45 | 47 | 5 |
| 125 | 50 | 60 | 61 | 5 |
| 125 | 50 | 80 | 81 | 5 |
| 125 | 50 | 100 | 101 | 5 |
| 125 | 50 | 120 | 121 | 5 |
| 125 | 50 | 160 | 161 | 5 |
| 125 | 100 | 15 | 24 | 5 |
| 125 | 100 | 30 | 35 | 5 |
| 125 | 100 | 45 | 49 | 5 |
| 125 | 100 | 60 | 63 | 5 |
| 125 | 100 | 80 | 82 | 5 |
| 125 | 100 | 100 | 102 | 5 |
| 125 | 100 | 120 | 121 | 5 |
| 125 | 100 | 160 | 161 | 5 |
| 125 | 200 | 15 | 30 | 5 |
| 125 | 200 | 30 | 39 | 5 |
| 125 | 200 | 45 | 52 | 5 |
| 125 | 200 | 60 | 65 | 5 |
| 125 | 200 | 80 | 84 | 5 |
| 125 | 200 | 100 | 103 | 5 |
| 125 | 200 | 120 | 123 | 5 |
| 125 | 200 | 160 | 162 | 5 |
| 125 | 500 | 15 | 43 | 5 |
| 125 | 500 | 30 | 50 | 5 |
| 125 | 500 | 45 | 61 | 5 |
| 125 | 500 | 60 | 72 | 5 |
| 125 | 500 | 80 | 90 | 5 |
| 125 | 500 | 100 | 108 | 5 |
| 125 | 500 | 120 | 127 | 5 |
| 125 | 500 | 160 | 165 | 5 |
| 115 | 50 | 15 | 19 | 5 |
| 115 | 50 | 30 | 32 | 5 |
| 115 | 50 | 45 | 47 | 5 |
| 115 | 50 | 60 | 61 | 5 |
| 115 | 50 | 80 | 81 | 5 |
| 115 | 50 | 100 | 101 | 5 |
| 115 | 50 | 120 | 121 | 5 |
| 115 | 50 | 160 | 160 | 5 |
| 115 | 100 | 15 | 22 | 5 |
| 115 | 100 | 30 | 34 | 5 |
| 115 | 100 | 45 | 48 | 5 |
| 115 | 100 | 60 | 62 | 5 |
| 115 | 100 | 80 | 82 | 5 |
| 115 | 100 | 100 | 101 | 5 |
| 115 | 100 | 120 | 121 | 5 |
| 115 | 100 | 160 | 161 | 5 |
| 115 | 200 | 15 | 28 | 5 |
| 115 | 200 | 30 | 38 | 5 |
| 115 | 200 | 45 | 51 | 5 |
| 115 | 200 | 60 | 64 | 5 |
| 115 | 200 | 80 | 83 | 5 |
| 115 | 200 | 100 | 103 | 5 |
| 115 | 200 | 120 | 122 | 5 |
| 115 | 200 | 160 | 162 | 5 |
| 115 | 500 | 15 | 40 | 5 |
| 115 | 500 | 30 | 48 | 5 |
| 115 | 500 | 45 | 58 | 5 |
| 115 | 500 | 60 | 71 | 5 |
| 115 | 500 | 80 | 88 | 5 |
| 115 | 500 | 100 | 107 | 5 |
| 115 | 500 | 120 | 126 | 5 |
| 115 | 500 | 160 | 164 | 5 |
| 105 | 50 | 15 | 18 | 5 |
| 105 | 50 | 30 | 32 | 5 |
| 105 | 50 | 45 | 46 | 5 |
| 105 | 50 | 60 | 61 | 5 |
| 105 | 50 | 80 | 81 | 5 |
| 105 | 50 | 100 | 101 | 5 |
| 105 | 50 | 120 | 120 | 5 |
| 105 | 50 | 160 | 160 | 5 |
| 105 | 100 | 15 | 21 | 5 |
| 105 | 100 | 30 | 34 | 5 |
| 105 | 100 | 45 | 48 | 5 |
| 105 | 100 | 60 | 62 | 5 |
| 105 | 100 | 80 | 81 | 5 |
| 105 | 100 | 100 | 101 | 5 |
| 105 | 100 | 120 | 121 | 5 |
| 105 | 100 | 160 | 161 | 5 |
| 105 | 200 | 15 | 26 | 5 |
| 105 | 200 | 30 | 37 | 5 |
| 105 | 200 | 45 | 50 | 5 |
| 105 | 200 | 60 | 64 | 5 |
| 105 | 200 | 80 | 83 | 5 |
| 105 | 200 | 100 | 102 | 5 |
| 105 | 200 | 120 | 122 | 5 |
| 105 | 200 | 160 | 161 | 5 |
| 105 | 500 | 15 | 37 | 5 |
| 105 | 500 | 30 | 45 | 5 |
| 105 | 500 | 45 | 56 | 5 |
| 105 | 500 | 60 | 69 | 5 |
| 105 | 500 | 80 | 87 | 5 |
| 105 | 500 | 100 | 106 | 5 |
| 105 | 500 | 120 | 125 | 5 |
| 105 | 500 | 160 | 164 | 5 |

# FIG.10

| COATING DIAME-TER | FIBER LENGTH | INNER WINDING DIAME-TER | OUTER BUNDLE DIAME-TER | BUNDLE HEIGHT | COATING DIAME-TER | FIBER LENGTH | INNER WINDING DIAME-TER | OUTER BUNDLE DIAME-TER | BUNDLE HEIGHT | COATING DIAME-TER | FIBER LENGTH | INNER WINDING DIAME-TER | OUTER BUNDLE DIAME-TER | BUNDLE HEIGHT |
|---|---|---|---|---|---|---|---|---|---|---|---|---|---|---|
| μm | m | mm | mm | mm | μm | m | mm | mm | mm | μm | m | mm | mm | mm |
| 95 | 50 | 15 | 18 | 5 | 85 | 50 | 15 | 17 | 5 | 75 | 50 | 15 | 17 | 5 |
|  |  | 30 | 32 | 5 |  |  | 30 | 31 | 5 |  |  | 30 | 31 | 5 |
|  |  | 45 | 46 | 5 |  |  | 45 | 46 | 5 |  |  | 45 | 46 | 5 |
|  |  | 60 | 61 | 5 |  |  | 60 | 61 | 5 |  |  | 60 | 60 | 5 |
|  |  | 80 | 81 | 5 |  |  | 80 | 80 | 5 |  |  | 80 | 80 | 5 |
|  |  | 100 | 100 | 5 |  |  | 100 | 100 | 5 |  |  | 100 | 100 | 5 |
|  |  | 120 | 120 | 5 |  |  | 120 | 120 | 5 |  |  | 120 | 120 | 5 |
|  |  | 160 | 160 | 5 |  |  | 160 | 160 | 5 |  |  | 160 | 160 | 5 |
| 95 | 100 | 15 | 20 | 5 | 85 | 100 | 15 | 19 | 5 | 75 | 100 | 15 | 19 | 5 |
|  |  | 30 | 33 | 5 |  |  | 30 | 32 | 5 |  |  | 30 | 32 | 5 |
|  |  | 45 | 47 | 5 |  |  | 45 | 47 | 5 |  |  | 45 | 46 | 5 |
|  |  | 60 | 62 | 5 |  |  | 60 | 61 | 5 |  |  | 60 | 61 | 5 |
|  |  | 80 | 81 | 5 |  |  | 80 | 81 | 5 |  |  | 80 | 81 | 5 |
|  |  | 100 | 101 | 5 |  |  | 100 | 101 | 5 |  |  | 100 | 101 | 5 |
|  |  | 120 | 121 | 5 |  |  | 120 | 121 | 5 |  |  | 120 | 120 | 5 |
|  |  | 160 | 161 | 5 |  |  | 160 | 160 | 5 |  |  | 160 | 160 | 5 |
| 95 | 200 | 15 | 25 | 5 | 85 | 200 | 15 | 23 | 5 | 75 | 200 | 15 | 21 | 5 |
|  |  | 30 | 36 | 5 |  |  | 30 | 35 | 5 |  |  | 30 | 34 | 5 |
|  |  | 45 | 49 | 5 |  |  | 45 | 48 | 5 |  |  | 45 | 48 | 5 |
|  |  | 60 | 63 | 5 |  |  | 60 | 62 | 5 |  |  | 60 | 62 | 5 |
|  |  | 80 | 82 | 5 |  |  | 80 | 82 | 5 |  |  | 80 | 81 | 5 |
|  |  | 100 | 102 | 5 |  |  | 100 | 102 | 5 |  |  | 100 | 101 | 5 |
|  |  | 120 | 122 | 5 |  |  | 120 | 121 | 5 |  |  | 120 | 121 | 5 |
|  |  | 160 | 161 | 5 |  |  | 160 | 161 | 5 |  |  | 160 | 161 | 5 |
| 95 | 500 | 15 | 34 | 5 | 85 | 500 | 15 | 31 | 5 | 75 | 500 | 15 | 29 | 5 |
|  |  | 30 | 43 | 5 |  |  | 30 | 41 | 5 |  |  | 30 | 39 | 5 |
|  |  | 45 | 55 | 5 |  |  | 45 | 53 | 5 |  |  | 45 | 51 | 5 |
|  |  | 60 | 67 | 5 |  |  | 60 | 66 | 5 |  |  | 60 | 65 | 5 |
|  |  | 80 | 86 | 5 |  |  | 80 | 85 | 5 |  |  | 80 | 84 | 5 |
|  |  | 100 | 105 | 5 |  |  | 100 | 104 | 5 |  |  | 100 | 103 | 5 |
|  |  | 120 | 124 | 5 |  |  | 120 | 123 | 5 |  |  | 120 | 122 | 5 |
|  |  | 160 | 163 | 5 |  |  | 160 | 162 | 5 |  |  | 160 | 162 | 5 |

EP 2 631 688 A1

<div align="center">

**INTERNATIONAL SEARCH REPORT**

</div>

| | International application No. |
|---|---|
| | PCT/JP2011/070815 |

**A. CLASSIFICATION OF SUBJECT MATTER**
*G02B6/024*(2006.01)i, *G02B6/00*(2006.01)i, *G02F1/365*(2006.01)i

According to International Patent Classification (IPC) or to both national classification and IPC

**B. FIELDS SEARCHED**

Minimum documentation searched (classification system followed by classification symbols)
G02B6/024, G02B6/00, G02F1/365

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-020854 A  (Sumitomo Electric Industries, Ltd.), 22 January 2004 (22.01.2004), paragraphs [0004] to [0009], [0039], [0074], [0079]; fig. 1, 2 (Family: none) | 1-7 |
| Y | JP 2005-055795 A  (The Furukawa Electric Co., Ltd.), 03 March 2005 (03.03.2005), paragraphs [0023] to [0056]; fig. 1, 2, 7 to 9 & US 2005/0213907 A1    & WO 2005/015303 A1 & CN 1711500 A          & CN 101174001 A & CN 101174002 A        & CN 101174003 A | 1-7 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 October, 2011 (26.10.11) | 08 November, 2011 (08.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

# EP 2 631 688 A1

| INTERNATIONAL SEARCH REPORT | International application No. |
|---|---|
| | PCT/JP2011/070815 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-207136 A  (Sumitomo Electric Industries, Ltd.),<br>26 July 2002 (26.07.2002),<br>paragraphs [0144] to [0150], [0157], [0164] to [0165]; fig. 15, 18<br>& US 2002/0057880 A1    & EP 1209497 A2<br>& AU 8941301 A          & CA 2361856 A<br>& AU 775453 B           & TW 226464 B<br>& KR 10-2002-0037294 A  & CN 1359013 A<br>& CN 1651945 A | 5,6 |
| Y | JP 2007-072182 A  (Sumitomo Electric Industries, Ltd.),<br>22 March 2007 (22.03.2007),<br>paragraphs [0068] to [0069]<br>& US 2007/0053641 A1    & EP 1762868 A1<br>& CN 1928596 A | 5-7 |
| A | JP 2007-010896 A  (Fujikura Ltd.),<br>18 January 2007 (18.01.2007),<br>paragraph [0006]; fig. 1<br>& US 2007/0116417 A1    & EP 1739464 A1<br>& CN 1892268 A | 1-7 |

Form PCT/ISA/210 (continuation of second sheet) (July 2009)

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002207136 A
- JP 3813496 B